# EUROPEAN PATENT SPECIFICATION

(11) **EP 3 932 596 B1**
(45) Date of publication and mention of the grant of the patent: **06.03.2024**
(21) Application number: 20315333.3
(22) Date of filing: 30.06.2020
(51) Int. Cl.: B23B 27/00

(54) **BORING BAR AND A NON-ROTATING BORING TOOL AND A BORING ARRANGEMENT COMPRISING SUCH A BORING BAR**
BOHRSTANGE UND NICHTDREHENDES BOHRWERKZEUG UND BOHRANORDNUNG MIT EINER SOLCHEN BOHRSTANGE
BARRE D'ALÉSAGE ET OUTIL DE FORAGE NON ROTATIF ET AGENCEMENT DE FORAGE COMPRENANT UNE TELLE BARRE D'ALÉSAGE

(43) Date of publication of application: 05.01.2022
(73) Proprietor: Seco Tools Tooling Systems, 67330 Bouxwiller (FR)
(72) Inventor: Groll, Yannick, 67330 Bouxwiller (FR); Ostermann, Mathieu, 67310 Sommerau (FR); Krumhorn, Pascal, 67350 Dauendorf (FR)
(74) Representative: Sandvik

(56) References cited:
- EP-A1- 1 535 682
- EP-A1- 3 511 112
- US-A- 5 170 103
- US-A- 5 913 955

## Description

### FIELD OF THE INVENTION AND PRIOR ART

The present invention relates to a boring bar according to the preamble of claim 1, which is known from document US 5 170 103 A. The invention also relates to a non-rotating boring tool and a boring arrangement comprising such a boring bar.

A cantilever boring bar with a cutting element at its free end may be used for performing different types of machining operations, such as for instance internal or external turning, on a rotating workpiece of metallic material. During the machining operations, the cutting element is subjected to cutting forces from the rotating workpiece, including a radial force directed along a line that extends perpendicularly to the axis of rotation of the workpiece and intersects the axis of rotation and the point of contact between the cutting element and the workpiece and a tangential force directed perpendicularly to the radial force and in the tangential direction of the workpiece surface at the point of contact between the cutting element and the workpiece. These mutually perpendicular cutting forces will induce vibrations in the boring bar, which in its turn may cause noise, impaired surface finish of the workpiece, tool breakage and other undesired effects.

Different types of active damping systems have been developed in order to reduce boring bar vibrations caused by the cutting forces on a cutting element at the outer end of a boring bar during machining of a workpiece. Such an active damping system may comprise at least one vibration sensor for sensing the vibration of the boring bar and at least one electrically controlled vibration actuator for generating vibratory forces in the boring bar, wherein the vibration actuator is controlled by an electronic control unit in dependence on measuring signals from the vibration sensor or sensors in order to introduce counter-vibrations in the boring bar that will interfere with and thereby counteract the vibrations induced in the boring bar by the cutting forces.

An active damping system of the above-mentioned type is disclosed in US 5 170 103 A where a vibration actuator is accommodated in a cavity inside the boring bar.

An active damping system may comprise one or more vibration actuators mounted to a machine tool on the outside of the ram thereof, as disclosed in EP 3 511 112 A1, in order to damp vibrations in the ram.

### OBJECT OF THE INVENTION

The object of the present invention is to provide a boring bar of the above-mentioned type that has a new and favourable design.

### SUMMARY OF THE INVENTION

According to the invention, said object is achieved by means of a boring bar having the features defined in claim 1.

The boring bar according to the invention is configured for use in a non-rotating boring tool and comprises:
- an elongated main part configured for attachment to a support structure of a metal cutting machine, the main part having a rear end and an opposite front end;
- a front part having a rear end facing the front end of the main part and an opposite front end, the front end of the front part being arranged to carry a tool part provided with a cutting element; and
- at least one damping module arranged between the front end of the main part and the rear end of the front part, wherein the at least one damping module has a rear end facing the main part, an opposite front end facing the front part and a centre axis extending between the rear end and the front end of the damping module. The at least one damping module is clamped between the main part and the front part by means of tie rods, wherein each one of the tie rods has a first end fixed to the main part and an opposite second end fixed to the front part, the tie rods preferably extending through passages in the at least one damping module.

Hereby, the damping module or modules may be fixed between the main part and the front part of the boring bar in a simple and reliable manner.

The at least one damping module is provided with an electrically controlled vibration actuator for active vibration damping of the boring bar, wherein this actuator is configured to generate vibratory forces. The above-mentioned front part of the boring bar is connected to the main part of the boring bar via the at least one damping module, wherein the main part, the front part and the damping module or modules together form an elongated body, and wherein the at least one damping module constitutes a length section of this elongated body. Thus, the main part, the at least one damping module and the front part constitute separate and consecutively arranged length sections of the elongated body, as seen in the longitudinal direction of the boring bar. Hereby, a vibration actuator may be integrated in the elongated body of the boring bar by first mounting the actuator within a casing of an associated damping module and then securing the damping module between the main part and the front part of the boring bar, which will facilitate the assembling of the boring bar. Furthermore, by having an actuator accommodated in a separate damping module, the damping characteristics may easily be adapted to the specific needs by modification of the damping module without having to change the other parts of the boring bar. The number of actuators in the boring bar may easily be varied in dependence on the specific needs by varying the number of damping modules arranged between the main part and the front part of the boring bar. The arrangement of an actuator in a separated damping module arranged between a main part and a front part of the boring bar also makes it easy to position the actuator close to the front end of the boring bar, which is a favourable position for the actuator due to the proximity to the cutting element where the vibrations of the boring bar are generated. Furthermore, the use of a separate damping module makes it easier to adapt this part of the boring bar to the requirements of the actuator for the purpose of maximizing the damping mass and the stroke of the actuator.

The at least one damping module is with advantage arranged with its centre axis aligned or substantially aligned with the longitudinal axis of the main part. A centering of the at least one damping module in the boring bar is hereby achieved, which will simplify the calculations used in the control of the actuator in the at least one damping module and thereby make it possible to achieve a damping system with good capability of responding to and damping vibrations in the boring bar in an accurate and quick manner. However, the at least one damping module may as an alternative be arranged with its centre axis out of alignment with the longitudinal axis of the main part.

The at least one damping module preferably has the same cross-sectional outer peripheral shape as the main part and/or the front part. Furthermore, the main part and/or the front part and/or the at least one damping module are with advantage cylindrical, preferably circular cylindrical.

According to an embodiment of the invention, an external periphery of the main part and an external periphery of the at least one damping module are flush or substantially flush with each other. The elongated body of the boring bar may hereby be designed with a smooth outer peripheral surface.

According to another embodiment of the invention, the actuator of the at least one damping module is a single-axis actuator configured to generate vibratory forces in parallel or at least substantially in parallel with one single working axis of the actuator. In this case, the actuator may be so arranged in the associated damping module that the working axis of the actuator extends in a cross-sectional plane that is perpendicular to the centre axis of the damping module, which implies that the actuator is arranged with its working axis crosswise to the longitudinal axis of the elongated body. In this case, the working direction of the actuator in relation to the point of contact between the cutting element and the workpiece may, in case of need, be adjusted by adjusting the rotary position of the associated damping module in relation to the front part of the boring bar.

According to another embodiment of the invention, the boring bar comprises at least two damping modules of the above-mentioned type arranged in series with each other between the front end of the main part and the rear end of the front part. Hereby, several vibration actuators may be integrated in the elongated body of the boring bar in a simple manner. The at least two damping modules are with advantage arranged to abut against each other. However, some kind of intermediate element may as an alternative be arranged between the at least two damping modules. The front part of the boring bar is preferably arranged with its rear end abutting against the front end of a foremost one of the at least two damping modules. However, some kind of intermediate element may as an alternative be arranged between the front part and the foremost damping module. A rearmost one of the at least two damping modules is preferably arranged with its rear end abutting against the front end of the main part. However, some kind of intermediate element may as an alternative be arranged between the main part and the rearmost damping module.

In order to facilitate the manufacturing of the boring bar, said at least two damping modules are with advantage of the same design and size.

According to another embodiment of the invention, the actuator in each of the at least two damping modules is a single-axis actuator configured to generate vibratory forces in parallel or at least substantially in parallel with one single working axis of the actuator, wherein the at least two damping modules are arranged with the working axes of the actuators angularly offset from each other. Hereby, the actuators of the different damping modules may be optimized for counteracting vibrations in different angular directions in relation to the longitudinal axis of the boring bar, which facilitates the achievement of an efficient vibration damping. In this case, an actuator of a first damping module may for instance be optimized for counteracting vibrations caused by the above-mentioned radial force on the cutting element and an actuator of a second damping module may be optimized for counteracting vibrations caused by the above-mentioned tangential force on the cutting element. In the latter case, it is suitable to use two damping modules arranged with the working axes of their actuators extending perpendicularly to each other, owing to the fact that said radial force is perpendicular to said tangential force.

Further advantageous features of the boring bar according to the present invention will appear from the description following below.

The invention also relates to a non-rotating boring tool comprising a boring bar of the above-mentioned type and a tool part provided with a cutting element, wherein this tool part is detachably attached to or integrally formed with the front part of the boring bar.

According to an embodiment of the invention, the front part of the boring bar is adjustable in its rotary position in relation to the at least one damping module, and/or said tool part is adjustable in its rotary position in relation to the front part of the boring bar. It will hereby be possible to adjust the angular position of the cutting element in relation to the at least one damping module in order to optimize the damping characteristics.

Another embodiment of the invention is characterized in:
- that the actuator in each damping module is a single-axis actuator configured to generate vibratory forces in parallel or at least substantially in parallel with one single working axis of the actuator; and
- that the cutting element comprises a rake side, a relief surface and a cutting edge formed at an intersection between the rake side and the relief surface, wherein when seen in a cross-sectional plane that is perpendicular to a longitudinal axis of the boring bar and intersects the cutting edge in a radially outermost point, a straight and imaginary reference line L intersects the cutting edge in the radially outermost point and extends in this cross-sectional plane at an angle of 6° to the relief surface on the outside of the cutting element, and wherein when seen in this cross-sectional plane, the working axis of the actuator in the damping module closest to the front part of the boring bar:
   - forms an angle of 90°±10° to said reference line L, preferably an angle of 90°±5°, more preferably an angle of 90°±1°, or
   - forms an angle of 0°±10°to said reference line L, preferably an angle of 0°±5°, more preferably an angle of 0°±1°.

The relief angle of a cutting element of a non-rotating boring tool is normally 6° or close to 6°, which implies that the above-mentioned tangential force on the cutting element will be directed substantially along the reference line L defined above, whereas the above-mentioned radial force on the cutting element will be directed substantially perpendicular to this reference line L. In order to achieve an efficient vibration damping of the boring bar of a non-rotating boring tool, it is favourable to have the working axis of the actuator in the damping module closest to the front part of the boring bar arranged substantially in parallel with the radial force on the cutting element so as to allow this actuator to efficiently dampen the vibrations caused by this radial force, or substantially in parallel with the tangential force on the cutting element so as to allow this actuator to efficiently dampen the vibrations caused by this tangential force. When the working axis of the actuator in the damping module closest to the front part of the boring bar is arranged to form an angle of 90°±10° to the above-mentioned reference line L, this actuator will consequently be focused on damping the vibrations in the boring bar caused by the radial force on the cutting element. When the working axis of the actuator in the damping module closest to the front part of the boring bar is arranged to form an angle of 0°±10° to the above-mentioned reference line L, this actuator will instead be focused on damping the vibrations in the boring bar caused by the tangential force on the cutting element.

According to another embodiment of the invention, the boring tool comprises at least one vibration sensor mounted to the front part of the boring bar or to said tool part. Hereby, the vibrations will be detected at a position close to the cutting element, which makes it possible to efficiently counteract the vibrations induced by the cutting forces acting on the cutting element.

Further advantageous features of the boring tool according to the present invention will appear from the description following below.

The invention also relates to a boring arrangement comprising a boring bar of the above-mentioned type and an electronic control unit configured to control the electric current to the actuator in each damping module in order to control the generation of vibratory forces in each damping module. The boring arrangement preferably also comprises at least one vibration sensor configured to generate measuring signals related to the vibration of the boring bar and to send the measuring signals to the electronic control unit, wherein the electronic control unit is configured to receive the measuring signals from the at least one vibration sensor and control the electric current to the actuator in each damping module in dependence on the measuring signals from the at least one vibration sensor in order to control the generation of vibratory forces in the actuator in each damping module in dependence on these measuring signals.

Further advantageous features of the boring arrangement according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a lateral view of a non-rotating boring tool according to an embodiment of the present invention,
- Fig 2: is a longitudinal section according to the line II-II in Fig 1,
- Fig 3: is an exploded view of the boring tool of Fig 1,
- Fig 4: is an exploded view from another direction of the boring tool of Fig 1,
- Fig 5: is a perspective view of a front end of the boring tool of Fig 1,
- Figs 6a and 6b: are front views of the boring tool of Fig 1,
- Fig 7a: is a perspective view from above of a cutting element included in the boring tool of Fig 1,
- Fig 7b: is a perspective view from below of the cutting element of Fig 7a,
- Fig 7c: is a lateral view of the cutting element of Fig 7a,
- Fig 8a: is a perspective view from above of an alternative cutting element,
- Fig 8b: is a perspective view from below of the cutting element of Fig 8a,
- Fig 8c: is a lateral view of the cutting element of Fig 8a,
- Fig 9: is an outline diagram of a boring arrangement according to an embodiment of the invention,
- Fig 10: is an outline diagram of a boring arrangement according to an alternative embodiment of the invention, and
- Fig 11: is an outline diagram of a boring arrangement according to another alternative embodiment of the invention.

### DETAILED DESCRIPTION OF EMBODIMENTS OF THE INVENTION

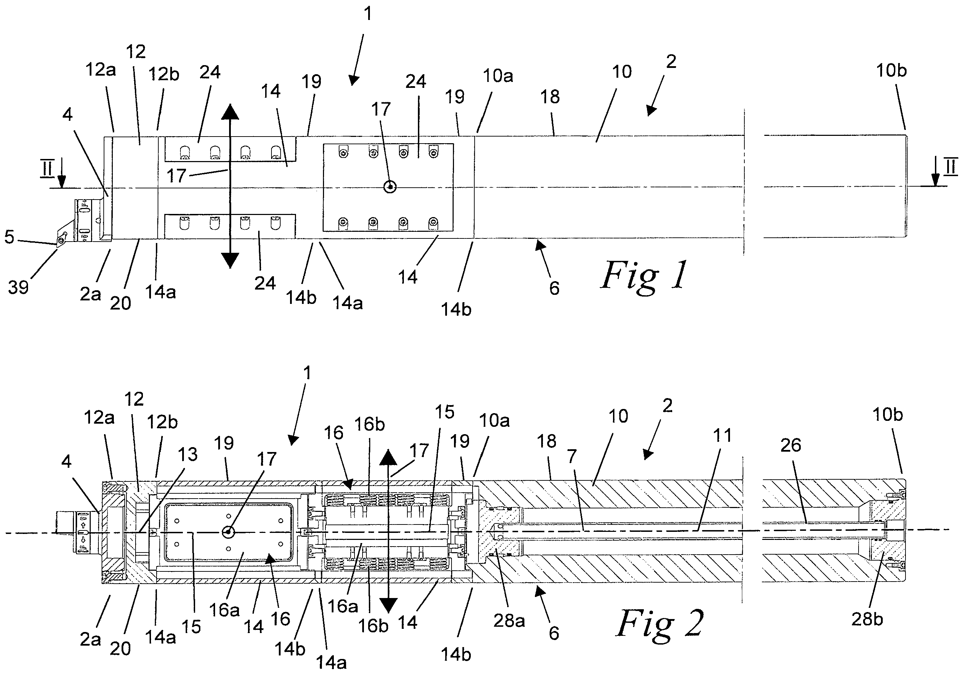

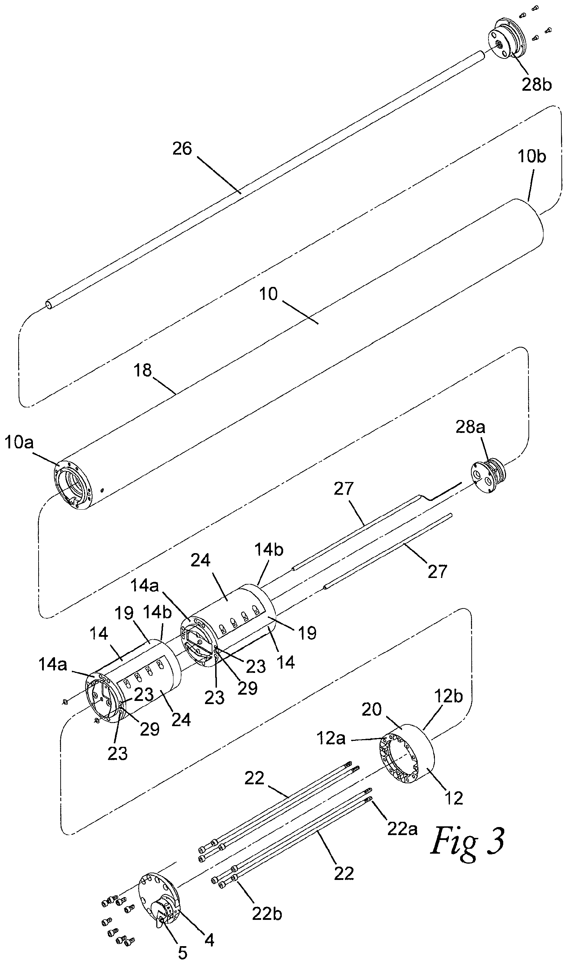

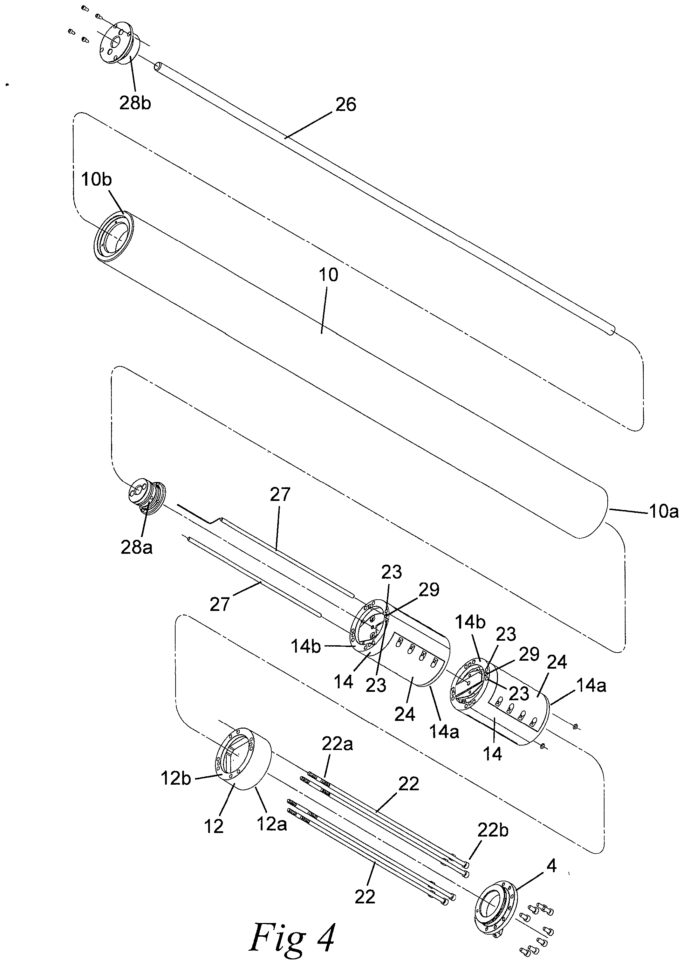

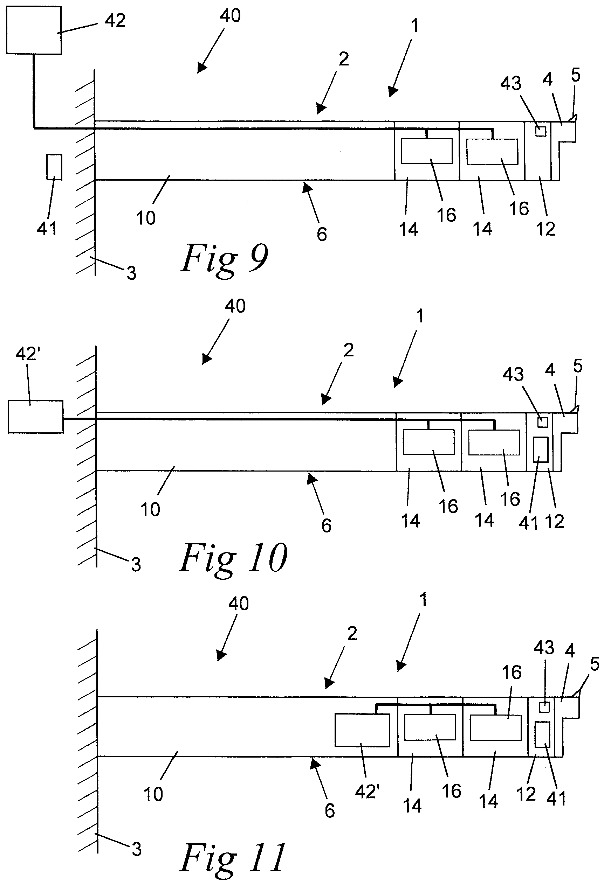

A non-rotating boring tool 1 according to an embodiment of the present invention is illustrated in Figs 1-5. The boring tool 1 is to be used for performing different types of machining operations, such as for instance internal or external turning, on a rotating workpiece of metallic material. The boring tool 1 comprises a boring bar 2, which is to be fixed to a support structure 3 of a metal cutting machine (very schematically illustrated in Figs 9-11) in order to project in a cantilevered manner from this support structure 3. The boring tool 1 also comprises a tool part 4 provided with a cutting element 5, wherein this tool part 4 is carried by the boring bar 2 and mounted to the boring bar at a front end 2a of the boring bar.

The boring bar 2 comprises an elongated main part 10 configured for attachment to the support structure 3 of the metal cutting machine. This main part 10 has a rear end 10b and an opposite front end 10a. A longitudinal axis 11 of the main part extends between the rear end 10b and the front end 10a of the main part. The main part 10 is preferably tubular and it is to be attached to said support structure 3 at its rear end 10b. In the illustrated embodiment, the main part 10 is cylindrical and has a circular cross-sectional shape. However, the main part 10 may also have any other suitable cross-sectional shape, such as for instance an elliptical or a polygonal cross-sectional shape.

The boring bar 2 further comprises a front part 12. This front part 12 has a rear end 12b facing the front end 10a of the main part 10 and an opposite front end 12a. A centre axis 13 of the front part extends between the rear end 12b and the front end 12a of the front part. The front end 12a of the front part is arranged to carry the above-mentioned tool part 4. Thus, this tool part 4 is attached to the front part 12 of the boring bar at the front end 12a thereof. As an alternative, the tool part 4 may be integrally formed with the front part 12, which implies that the tool part 4 and the front part 12 are combined into a common component. In the illustrated embodiment, the front part 12 is cylindrical and has a circular cross-sectional shape. However, the front part 12 may also have any other suitable cross-sectional shape, such as for instance an elliptical or a polygonal cross-sectional shape.

The boring bar 2 also comprises at least one damping module 14 arranged between the front end 10a of the main part 10 and the rear end 12b of the front part 12, wherein this damping module 14 has a rear end 14b facing the main part 10, an opposite front end 14a facing the front part 12 and a centre axis 15 extending between the rear end 14b and the front end 14a of the damping module. In the illustrated embodiment, the boring bar 2 comprises two such damping modules 14 arranged in series with each other between the front end 10a of the main part 10 and the rear end 12b of the front part 12. Thus, these two damping modules 14 are arranged in series with each other in the longitudinal direction of the boring bar 2. The boring bar 2 may as an alternative comprise more than two damping modules 14 arranged in series with each other in the longitudinal direction of the boring bar 2 or one single damping module 14.

In the illustrated embodiment, the damping modules 14 are cylindrical and have a circular cross-sectional shape. However, the damping modules 14 may also have any other suitable cross-sectional shape, such as for instance an elliptical or a polygonal cross-sectional shape.

Each one of the damping modules 14 is provided with an electrically controlled vibration actuator 16 for active vibration damping of the boring bar 2, wherein this actuator 16 is arranged in a housing 14c of the associated damping module and configured to generate vibratory forces in order to counteract vibrations induced in the boring bar 2 by cutting forces acting on the cutting element 5 during machining of a rotating workpiece. The vibratory forces generated by the actuators 16 of the damping modules 14 may also be used for intermittently vibrating the cutting element 5 in order to break to pieces larger metal chips cut off from a workpiece by the cutting element 5.

In the illustrated embodiment, each damping module 14 is provided with one single vibration actuator 16. However, an individual damping module 14 may as an alternative be provided with two or more vibration actuators 16, preferably but not necessarily with the working axes 17 of the two or more actuators 16 angularly offset from each other.

Each actuator 16 comprises a moveably arranged damping mass 16a configured to generate vibratory forces in parallel or at least substantially in parallel with a working axis 17 of the actuator, wherein the damping mass 16a is moveable in relation to the housing 14c of the associated damping module 14. In the illustrated embodiment, the damping mass 16a is moveable in relation to the housing 14c of the damping module 14 against the action of return springs 16b arranged on opposite sides of the damping mass 16a. The actuators 16 may be of electromagnetic type, wherein the vibratory forces are electromagnetically generated. However, any other suitable type of vibration actuators may also be used.

The front part 12 is connected to the main part 10 via the damping modules 14. The main part 10, the front part 12 and the damping modules 14 together form an elongated body 6, wherein the main part 10, each individual damping module 14 and the front part 12 constitute separate length sections, i.e. separate segments, of this elongated body 6. Thus, the main part 10, the damping modules 14 and the front part 12 constitute consecutive sections of the elongated body 6 of the boring bar, as seen in the longitudinal direction thereof.

In the illustrated embodiment, the damping modules 14 abut directly against each other, wherein the rear end 14b of a foremost one of the damping modules abuts against the front end 14a of the other damping module, i.e. the rearmost damping module. As illustrated in Figs 1-5, the front part 12 may be arranged with its rear end 12b abutting directly against the front end 14a of the foremost damping module and the rearmost damping module may be arranged with its rear end 14b abutting directly against the front end 10a of the main part 10.

An external periphery 18 of the main part 10 and an external periphery 19 of each damping module 14 are with advantage flush or substantially flush with each other, as illustrated in Figs 1, 2 and 5. Furthermore, an external periphery 20 of the front part 12 is with advantage flush or substantially flush with the external periphery 19 of the foremost damping module 14.

In the illustrated embodiment, each one of the damping modules 14 is arranged with its centre axis 15 aligned or substantially aligned with the longitudinal axis 11 of the main part 10.

In order to facilitate maintenance and repair of the boring bar 2, the main part 10, the damping modules 14 and the front part 12 are preferably detachably mounted to each other. In the illustrated embodiment, the damping modules 14 are clamped between the main part 10 and the front part 12 by means of tie rods 22. Each tie rod 22 has a first end 22a fixed to the main part 10 and an opposite second end 22b fixed to the front part 12. Furthermore, each tie rod 22 extends through mutually aligned passages 23 in the damping modules 14.

In the illustrated embodiment, the actuator 16 in each one of the damping modules 14 is accessible through two openings on opposite sides of the damping module, wherein each opening is covered by a detachably mounted cover 24, which forms part of the external periphery 19 of the damping module and which is secured in the associated opening by means of fastening elements 25 in the form of screws. Passages 23 for some of the above-mentioned tie rods 22 may be provided in the covers 24.

In the illustrated embodiment, cooling fluid is supplied to the tool part 4 through a first feed pipe 26, which extends axially through the main part 10 of the boring bar 2, and at least one second feed pipe 27, which extends between the main part 10 and the front part 12 of the boring bar in parallel with the tie rods 22. In the illustrated example, the boring bar 2 is provided with two such second feed pipes 27. The first feed pipe 26 is fixed to the main part 10 of the boring bar by means of a first end piece 28a fixed to the main part 10 at the front end 10a thereof and a second end piece 28b fixed to the main part 10 at the rear end 10b thereof. Each one of the second feed pipes 27 is connected to the first feed pipe 26 via internal channels in the first end piece 28a. Furthermore, each one of the second feed pipes 27 may be arranged to extend through mutually aligned passages 29 in the damping modules 14.

The actuator 16 in each one of the damping modules 14 is preferably a single-axis actuator configured to generate vibratory forces in parallel or at least substantially in parallel with one single working axis 17 of the actuator. In the illustrated embodiment, the working axis 17 of each one of the actuators 16 extends in a cross-sectional plane that is perpendicular to the centre axis 15 of the associated damping module 14, wherein the damping modules 14 are arranged with the working axes 17 of their actuators 16 angularly offset from each other. Thus, the actuators 16 of the damping modules 14 are arranged in mutually different rotary positions in the elongated body 6. When the damping modules 14 are two in number, they are preferably arranged with the working axes 17 of the actuators 16 extending perpendicularly to each other, as illustrated in Figs 1 and 2.

In order to make possible an adjustment of the angular position of the working axes 17 of the actuators 16 in relation to the cutting element 5, the front part 12 of the boring bar 2 may be adjustable in its rotary position in relation to the damping modules 14, which implies that the front part 12 is attachable to the foremost damping module 14 in different selectable rotary positions in relation to this damping module. As an alternative to or in combination with such a rotary adjustability of the front part 12 in relation to the damping modules 14, the tool part 4 provided with the cutting element 5 may be adjustable in its rotary position in relation to the front part 12 of the boring bar, which implies that the tool part 4 is attachable to the front part 12 in different selectable rotary positions in relation to the front part. A damping module 14 may also be arranged such that its actuator 16 may be adjustable in its rotary position in relation to a casing of the damping module. When the damping modules 14 are two or more in number, they may be arranged such that their respective rotary positions may be adjustable in relation to each other.

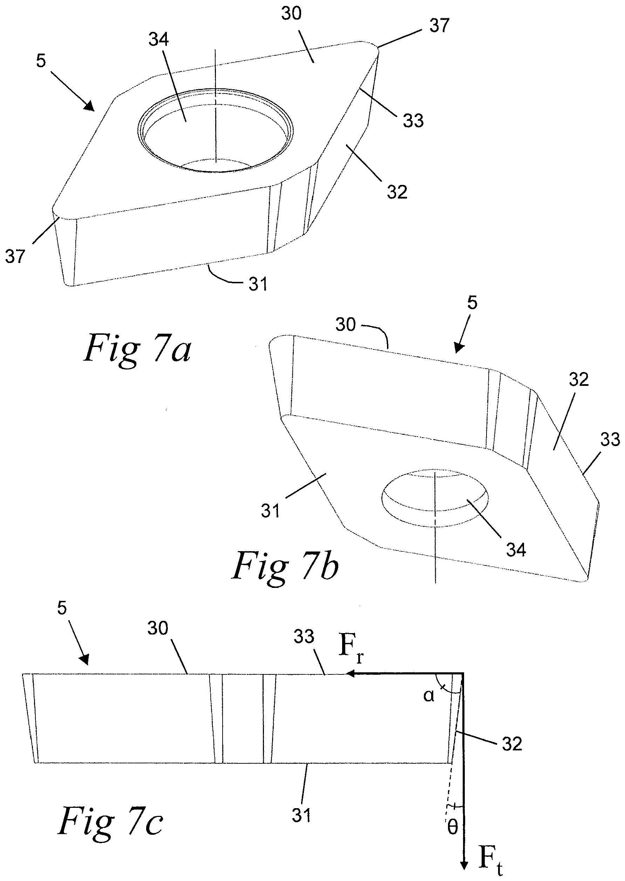

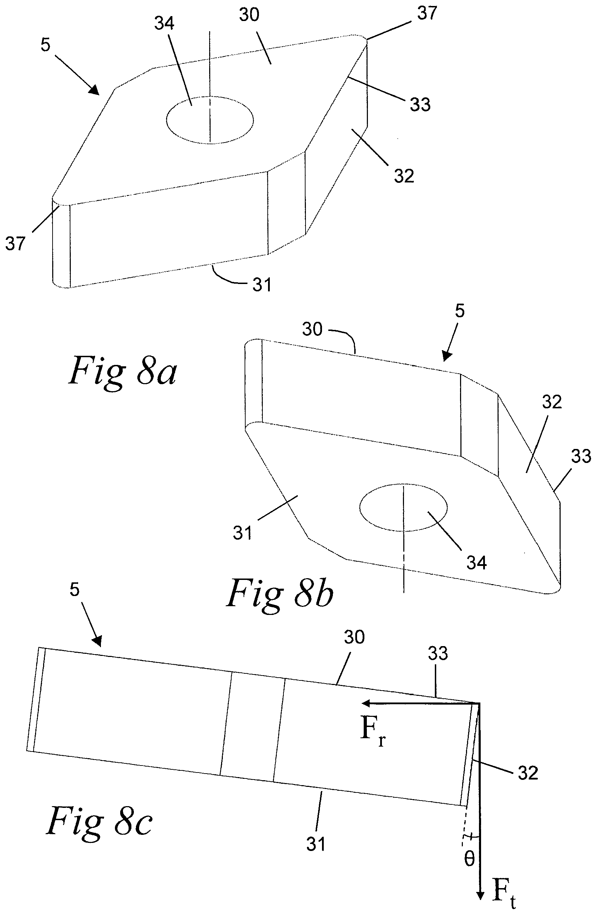

The cutting element 5 fixed to the tool part 4 may be a positive cutting element, as illustrated in Figs 7a-7c, or a negative cutting element, as illustrated in Figs 8a-8c. The cutting element 5 comprises an upper rake side 30, a bottom side 31 extending in parallel or substantially in parallel with the rake side 30 and a peripheral relief surface 32 extending between the rake side 30 and the bottom side 31. A cutting edge 33 is formed at an intersection between the rake side 30 and the relief surface 32. In the illustrated examples, the cutting edge 33 extends all around the rake side 30 along the periphery thereof. In case of a positive cutting element 5, the relief surface 32 extends at an acute angle α to the rake side 30, as illustrated in Fig 7c. In case of a negative cutting element 5, the relief surface 32 extends at a right angle to the rake side 30, as illustrated in Fig 8c.

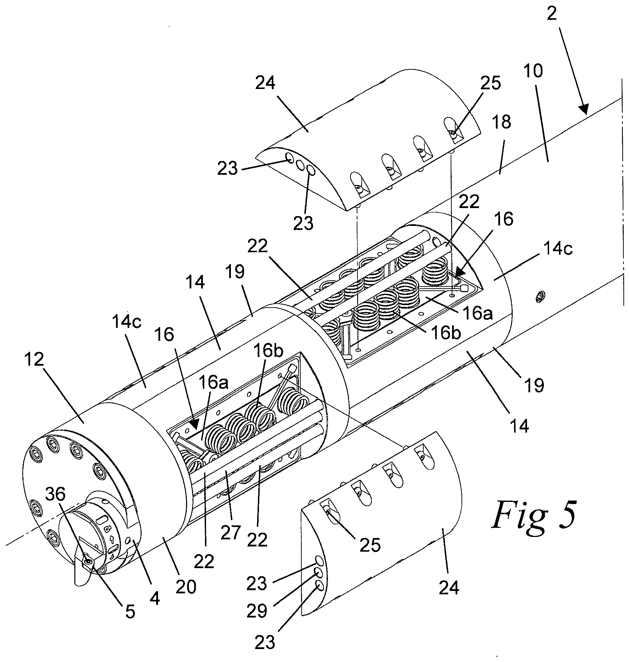

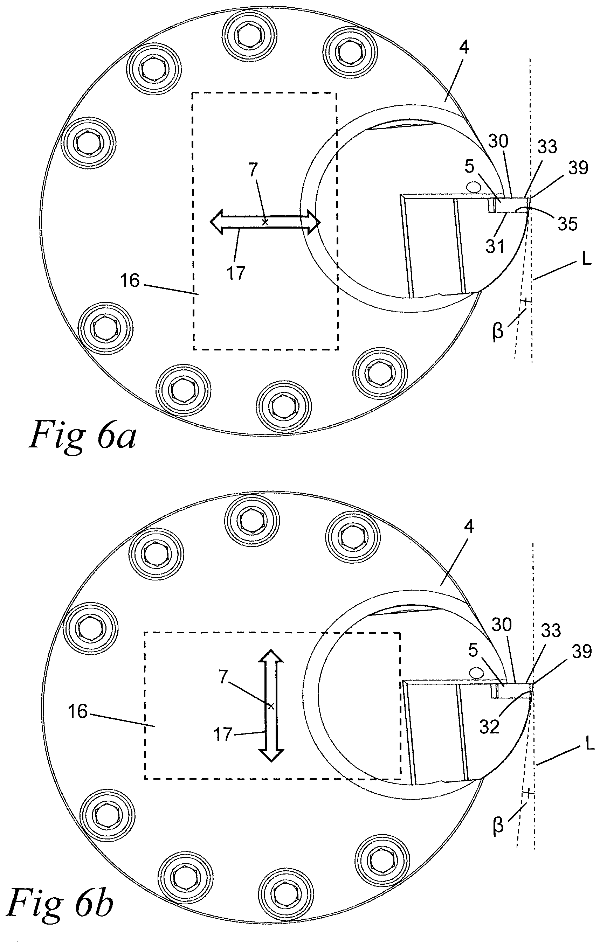

A hole 34 extends across the cutting element 5 between the rake side 30 and the bottom side 31. The cutting element 5 is configured to be releasably mounted to the tool part 4 with the bottom side 31 of the cutting element 5 resting against a support surface 35 (see Fig 6a) on a seat provided for the cutting element in the tool part 4. The cutting element 5 is fixed to said seat in the tool part 4 by means of a fastening element 36 in the form of a screw (see Fig 5), which extends through the hole 34 in the cutting element 5 and is engaged in a threaded hole in the support surface 35 on the seat.

In the illustrated examples, the cutting element 5 comprises two cutting corners 37 located opposite each other on opposite sides of the cutting element. The cutting element 5 is to be fixed to the tool part 4 with one of the cutting corners 37 facing outwards away from the longitudinal axis 7 of the boring bar 2, wherein the cutting element 5 is intended to make contact with a rotating workpiece via this outwardly facing cutting corner 37. During machining of a rotating workpiece, the boring tool 1 is normally so positioned in relation to the workpiece that the above-mentioned tangential force Fₜ on the cutting element 5 will be directed at an angle θ of approximately 6° to the relief surface 32, as illustrated in Figs 7c and 8c.

A straight and imaginary reference line L (see Figs 6a and 6b) is defined in a cross-sectional plane that is perpendicular to the longitudinal axis 7 of the boring bar 2 and that intersects the cutting edge 33 in a radially outermost point 39, wherein this reference line L intersects the cutting edge 33 in the radially outermost point 39 and extends in this cross-sectional plane at an angle β of 6° to the relief surface 32 on the outside of the cutting element 5, i.e. with this angle β measured on the outside of the cutting element 5. Thus, when a positive cutting element 5 of the type illustrated in Figs 7a-7c with a relief angle of 6° is fixed to the tool part 4, the reference line L may extend perpendicularly to the rake side 30 of the cutting element, as illustrated in Figs 6a and 6b.

The actuator 16 in the damping module 14 closest to the front part 12 of the boring bar 2 is with advantage arranged in such a rotary position in the boring bar 2 that its working axis 17, when seen in the above-mentioned cross-sectional plane, forms an angle of 90°±10°to said reference line L (as illustrated in Fig 6a), preferably an angle of 90°±5°, and more preferably an angle of 90°±1°. In this case, the working axis 17 of this actuator is arranged substantially in parallel with the radial force Fᵣ on the cutting element 5. With such an arrangement of the actuator 16 in the damping module 14 closest to the front part 12 of the boring bar, this actuator will be optimized for counteracting the vibrations caused by the radial force Fᵣ on the cutting element 5.

According to a favourable alternative, the actuator 16 in the damping module 14 closest to the front part 12 of the boring bar 2 is arranged in such a rotary position in the boring bar 2 that its working axis 17, when seen in the above-mentioned cross-sectional plane, forms an angle of 0°±10° to said reference line L (as illustrated in Fig 6b), preferably an angle of 0°±5°, and more preferably an angle of 0°±1°. In this case, the working axis 17 of this actuator is arranged substantially in parallel with the tangential force Fₜ on the cutting element 5. With such an arrangement of the actuator 16 in the damping module 14 closest to the front part 12 of the boring bar, this actuator will be optimized for counteracting the vibrations caused by the tangential force Fₜ on the cutting element 5.

Different embodiments of a boring arrangement 40 comprising a boring bar 2 of the type described above are very schematically illustrated in Figs 9-11. The boring arrangement 40 further comprises an electronic control unit 41, which is configured to control the supply of electric current to the actuators 16 in the damping modules 14 of the boring bar 2 in order to control the generation of vibratory forces in the damping modules. The electric current is supplied to the actuators 16 from a power source, which may be an external power source 42, as illustrated in Fig 9, or a power supply unit 42' mounted to the boring bar 2, as illustrated in Fig 11, or to the support structure 3 or any other part of the metal cutting machine, as illustrated in Fig 10. The power supply unit 42' comprises at least one energy storage member, for instance in the form of a battery, for storing electric energy. The electronic control unit 41 may be mounted to the front part 12 of the boring bar 2, as illustrated in Figs 10 and 11, or to any other part of the boring bar. As a further alternative, the electronic control unit 41 may be mounted to the support structure 3 or any other part of the metal cutting machine, as illustrated in Fig 9.

The boring arrangement 40 further comprises at least one vibration sensor 43, for instance in the form of an accelerometer, which is configured to generate measuring signals related to the vibration of the boring bar 2 and to send the measuring signals to the electronic control unit 41 through a wireless connection or a cable connection. Said at least one vibration sensor 43 is preferably mounted to the front part 12 of the boring bar or to the tool part 4, but it may as an alternative be mounted to any other suitable part of the boring bar 2.

The electronic control unit 41 is configured to receive the measuring signals from the at least one vibration sensor 43 and to control the supply of electric current to the actuators 16 in the damping modules 14 in dependence on these measuring signals in order to control the generation of vibratory forces in each damping module 14 in dependence on these measuring signals and thereby counteract the vibrations induced in the boring bar 2 by the cutting forces Fᵣ, Fₜ acting on the cutting element 5 during machining of a workpiece.

The invention is of course not in any way restricted to the embodiments described above. On the contrary, many possibilities to modifications thereof will be apparent to a person with ordinary skill in the art without departing from the basic idea of the invention such as defined in the appended claims. For example, it is possible to arrange the actuator in the associated damping module such that the working axis of the actuator is parallel to or coincides with the centre axis of the damping module, which implies that the actuator is arranged with its working axis in parallel to or alignment with the longitudinal axis of the elongated body. It is also possible to integrate a two-axes actuator in one damping module in order to obtain damping both in radial and tangential direction of the boring bar by using only one damping module.

## Claims

1. A boring bar (2) for a non-rotating boring tool, the boring bar (2) comprising:
- an elongated main part (10) configured for attachment to a support structure of a metal cutting machine, the main part (10) having a rear end (10b) and an opposite front end (10a); and
- a front part (12) having a rear end (12b) facing the front end (10a) of the main part (10) and an opposite front end (12a), the front end (12a) of the front part (12) being arranged to carry a tool part (4) provided with a cutting element (5),
wherein:
- the boring bar (2) comprises at least one damping module (14) arranged between the front end (10a) of the main part (10) and the rear end (12b) of the front part (12), wherein the at least one damping module (14) has a rear end (14b) facing the main part (10), an opposite front end (14a) facing the front part (12) and a centre axis (15) extending between the rear end (14b) and the front end (14a) of the damping module;
- the at least one damping module (14) is provided with an electrically controlled vibration actuator (16) for active vibration damping of the boring bar (2), wherein this actuator (16) is configured to generate vibratory forces; and
- the front part (12) is connected to the main part (10) via the at least one damping module (14), wherein the main part (10), the front part (12) and the at least one damping module (14) together form an elongated body (6), and wherein the at least one damping module (14) constitutes a length section of the elongated body (6);
- **characterised in that** the at least one damping module (14) is clamped between the main part (10) and the front part (12) by means of tie rods (22), wherein each one of the tie rods (22) has a first end (22a) fixed to the main part (10) and an opposite second end (22b) fixed to the front part (12), the tie rods (22) preferably extending through passages (23) in the at least one damping module (14).

2. A boring bar according to claim 1, **characterized in that** the at least one damping module (14) has the same cross-sectional outer peripheral shape as the main part (10) and/or the front part (12).

3. A boring bar according to claim 1 or 2, **characterized in that** the main part (10) and/or the front part (12) and/or the at least one damping module (14) are cylindrical, preferably circular cylindrical.

4. A boring bar according to any of claims 1-3, **characterized in that** an external periphery (18) of the main part (10) and an external periphery (19) of the at least one damping module (14) are flush or substantially flush with each other.

5. A boring bar according to any of claims 1-4, **characterized in that** the at least one damping module (14) is arranged with its centre axis (15) aligned or substantially aligned with a longitudinal axis (11) of the main part (10).

6. A boring bar according to any of claims 1-5, **characterized in that** said actuator (16) is a single-axis actuator configured to generate vibratory forces in parallel or at least substantially in parallel with one single working axis (17) of the actuator (16).

7. A boring bar according to claim 6, **characterized in that** said working axis (17) extends in a cross-sectional plane that is perpendicular to the centre axis (15) of the at least one damping module (14).

8. A boring bar according to any of claims 1-7, **characterized in that** the boring bar (2) comprises at least two such damping modules (14) arranged in series with each other between the front end (10a) of the main part (10) and the rear end (12b) of the front part (12).

9. A boring bar according to claim 8, **characterized in that** the at least two damping modules (14) abut against each other.

10. A boring bar according to claim 8 or 9, **characterized in that** the actuator (16) in each of the at least two damping modules (14) is a single-axis actuator configured to generate vibratory forces in parallel or at least substantially in parallel with one single working axis (17) of the actuator (16), wherein the at least two damping modules (14) are arranged with the working axes (17) of the actuators angularly offset from each other.

11. A boring bar according to claim 10, **characterized in that** the at least two damping modules (14) are arranged with the working axes (17) of the actuators (16) extending perpendicularly to each other.

12. A non-rotating boring tool, **characterized in that** it comprises:
- a boring bar (2) according to any of claims 1-11; and
- a tool part (4) provided with a cutting element (5), wherein this tool part (4) is detachably attached to or integrally formed with the front part (12) of the boring bar.

13. A non-rotating boring tool according to claim 12, **characterized in that** the front part (12) of the boring bar is adjustable in its rotary position in relation to the at least one damping module (14), and/or that said tool part (4) is adjustable in its rotary position in relation to the front part (12) of the boring bar.

14. A non-rotating boring tool according to claim 12 or 13, **characterized in:**
- **that** the actuator (16) in each damping module (14) of the at least one damping module or of the at least two damping modules is a single-axis actuator configured to generate vibratory forces in parallel or at least substantially in parallel with one single working axis (17) of the actuator (16); and
- **that** the cutting element (5) comprises a rake side (30), a relief surface (32) and a cutting edge (33) formed at an intersection between the rake side and the relief surface, wherein when seen in a cross-sectional plane that is perpendicular to a longitudinal axis (7) of the boring bar (2) and intersects the cutting edge (33) in a radially outermost point (39), a straight and imaginary reference line L intersects the cutting edge (33) in the radially outermost point (39) and extends in this cross-sectional plane at an angle (β) of 6° to the relief surface (32) on the outside of the cutting element (5), and wherein when seen in this cross-sectional plane, the working axis (17) of the actuator (16) in the damping module (14) closest to the front part (12) of the boring bar:
• forms an angle of 90°±10° to said reference line L, preferably an angle of 90°±5°, more preferably an angle of 90°±1°, or
• forms an angle of 0°±10°to said reference line L, preferably an angle of 0°±5°, more preferably an angle of 0°±1°.

15. A non-rotating boring tool according to any of claims 12-14, **characterized in that** the boring tool (1) comprises at least one vibration sensor (43) mounted to the front part (12) of the boring bar or to said tool part (4).

16. A boring arrangement, **characterized in that** it comprises:
- a boring bar (2) according to any of claims 1-11; and
- an electronic control unit (41) configured to control the electric current to the actuator (16) in each damping module (14) of the at least one damping module or of the at least two damping modules in order to control the generation of vibratory forces in the actuator (16) in each damping module (14) of the at least one damping module or of the at least two damping modules.

17. A boring arrangement according to claim 16, **characterized in:**
- **that** the boring arrangement (40) comprises at least one vibration sensor (43) configured to generate measuring signals related to the vibration of the boring bar (2) and to send the measuring signals to the electronic control unit (41); and
- **that** the electronic control unit (41) is configured to receive the measuring signals from the at least one vibration sensor (43), wherein the electronic control unit (41) is configured to control the electric current to the actuator (16) in each damping module (14) of the at least one damping module or of the at least two damping modules in dependence on the measuring signals from the at least one vibration sensor (43) in order to control the generation of vibratory forces in the actuator (16) in each damping module (14) of the at least one damping module or of the at least two damping modules in dependence on these measuring signals.

## Patentansprüche

1. Bohrstange (2) für ein nicht-rotierendes Bohrwerkzeug, wobei die Bohrstange (2) Folgendes aufweist:
- ein längliches Hauptteil (10), das zur Anbringung an einer Stützstruktur einer Metallbearbeitungsmaschine eingerichtet ist, wobei das Hauptteil (10) ein hinteres Ende (10b) und ein gegenüberliegendes vorderes Ende (10a) aufweist, und
- ein Vorderteil (12) mit einem hinteren Ende (12b), das dem vorderen Ende (10a) des Hauptteils (10) zugewandt ist, und einem gegenüberliegenden vorderen Ende (12a), wobei das vordere Ende (12a) des Vorderteils (12) so angeordnet ist, dass es ein Werkzeugteil (4) trägt, das ein Schneidelement (5) aufweist, wobei:
- die Bohrstange (2) wenigstens ein Dämpfungsmodul (14) enthält, das zwischen dem vorderen Ende (10a) des Hauptteils (10) und dem hinteren Ende (12b) des Vorderteils (12) angeordnet ist, wobei das wenigstens eine Dämpfungsmodul (14) ein hinteres Ende (14b), das dem Hauptteil (10) zugewandt ist, ein gegenüberliegendes vorderes Ende (14a), das dem Vorderteil (12) zugewandt ist, und eine Mittelachse (15) aufweist, die sich zwischen dem hinteren Ende (14b) und dem vorderen Ende (14a) des Dämpfungsmoduls erstreckt,
- das wenigstens eine Dämpfungsmodul (14) mit einem elektrisch gesteuerten Schwingungsaktor (16) zur aktiven Schwingungsdämpfung der Bohrstange (2) versehen ist, wobei dieser Aktor (16) zur Erzeugung von Schwingungskräften eingerichtet ist, und
- das Vorderteil (12) über das wenigstens eine Dämpfungsmodul (14) mit dem Hauptteil (10) verbunden ist, wobei das Hauptteil (10), das Vorderteil (12) und das wenigstens eine Dämpfungsmodul (14) zusammen einen langgestreckten Körper (6) bilden, und wobei das wenigstens eine Dämpfungsmodul (14) einen Längenabschnitt des langgestreckten Körpers (6) bildet,
- **dadurch gekennzeichnet, dass** das wenigstens eine Dämpfungsmodul (14) zwischen dem Hauptteil (10) und dem Vorderteil (12) mittels Verbindungsstangen (22) eingespannt ist, wobei jede der Verbindungsstangen (22) ein erstes Ende (22a), das an dem Hauptteil (10) befestigt ist, und ein gegenüberliegendes zweites Ende (22b), das an dem Vorderteil (12) befestigt ist, aufweist, wobei sich die Verbindungsstangen (22) vorzugsweise durch Durchlässe (23) in dem wenigstens einen Dämpfungsmodul (14) erstrecken.

2. Bohrstange nach Anspruch 1, **dadurch gekennzeichnet, dass** das wenigstens eine Dämpfungsmodul (14) die gleiche querschnittsmäßige Außenumfangsform aufweist wie das Hauptteil (10) und/oder das Vorderteil (12).

3. Bohrstange nach Anspruch 1 oder 2, **dadurch gekennzeichnet, dass** das Hauptteil (10) und/oder das Vorderteil (12) und/oder das mindestens eine Dämpfungsmodul (14) zylindrisch, vorzugsweise kreiszylindrisch, ausgebildet sind.

4. Bohrstange nach einem der Ansprüche 1 bis 3, **dadurch gekennzeichnet, dass** ein Außenumfang (18) des Hauptteils (10) und ein Außenumfang (19) des wenigstens einen Dämpfungsmoduls (14) fluchtend oder im Wesentlichen fluchtend ausgerichtet sind.

5. Bohrstange nach einem der Ansprüche 1-4, **dadurch gekennzeichnet, dass** das mindestens eine Dämpfungsmodul (14) mit seiner Mittelachse (15) in einer Linie oder im Wesentlichen in einer Linie mit einer Längsachse (11) des Hauptteils (10) angeordnet ist.

6. Bohrstange nach einem der Ansprüche 1-5, **dadurch gekennzeichnet, dass** der Aktuator (16) ein einachsiger Aktuator ist, der so konfiguriert ist, dass er Schwingungskräfte parallel oder zumindest im Wesentlichen parallel zu einer einzigen Arbeitsachse (17) des Aktuators (16) erzeugt.

7. Bohrstange nach Anspruch 6, **dadurch gekennzeichnet, dass** die Arbeitsachse (17) in einer Querschnittsebene verläuft, die senkrecht zur Mittelachse (15) des mindestens einen Dämpfungsmoduls (14) liegt.

8. Bohrstange nach einem der Ansprüche 1 bis 7, **dadurch gekennzeichnet, dass** die Bohrstange (2) mindestens zwei solcher Dämpfungsmodule (14) umfasst, die in Reihe zueinander zwischen dem vorderen Ende (10a) des Hauptteils (10) und dem hinteren Ende (12b) des Vorderteils (12) angeordnet sind.

9. Bohrstange nach Anspruch 8, **dadurch gekennzeichnet, dass** die mindestens zwei Dämpfungsmodule (14) aneinanderstoßen.

10. Bohrstange nach Anspruch 8 oder 9, **dadurch gekennzeichnet, dass** der Aktuator (16) in jedem der mindestens zwei Dämpfungsmodule (14) ein einachsiger Aktuator ist, der so konfiguriert ist, dass er Schwingungskräfte parallel oder zumindest im Wesentlichen parallel zu einer einzigen Arbeitsachse (17) des Aktuators (16) erzeugt, wobei die mindestens zwei Dämpfungsmodule (14) so angeordnet sind, dass die Arbeitsachsen (17) der Aktuatoren winklig zueinander versetzt sind.

11. Bohrstange nach Anspruch 10, **dadurch gekennzeichnet, dass** die mindestens zwei Dämpfungsmodule (14) mit senkrecht zueinander verlaufenden Arbeitsachsen (17) der Stellglieder (16) angeordnet sind.

12. Nicht-rotierendes Bohrwerkzeug, **dadurch gekennzeichnet, dass** es Folgendes aufweist:
- eine Bohrstange (2) nach einem der Ansprüche 1-11, und
- ein mit einem Schneidelement (5) versehenes Werkzeugteil (4), wobei dieses Werkzeugteil (4) an dem Vorderteil (12) der Bohrstange lösbar angebracht oder einstückig damit ausgebildet ist.

13. Nicht-rotierendes Bohrwerkzeug nach Anspruch 12, **dadurch gekennzeichnet, dass** das Vorderteil (12) der Bohrstange in seiner Drehlage gegenüber dem mindestens einen Dämpfungsmodul (14) einstellbar ist und/oder dass das Werkzeugteil (4) in seiner Drehlage gegenüber dem Vorderteil (12) der Bohrstange einstellbar ist.

14. Nicht-rotierendes Bohrwerkzeug nach Anspruch 12 oder 13, **dadurch gekennzeichnet:**
- **dass** der Aktor (16) in jedem Dämpfungsmodul (14) des wenigstens einen Dämpfungsmoduls oder der wenigstens zwei Dämpfungsmodule ein einachsiger Aktor ist, der so eingerichtet ist, dass er Schwingungskräfte parallel oder wenigstens im Wesentlichen parallel zu einer einzigen Arbeitsachse (17) des Aktors (16) erzeugt, und
- **dass** das Schneidelement (5) eine Spanfläche (30), eine Freifläche (32) und eine Schneidkante (33) aufweist, die an einem Schnittpunkt zwischen der Spanfläche und der Freifläche ausgebildet ist, wobei bei Betrachtung in einer Querschnittsebene, die zueiner Längsachse (7) der Bohrstange (2) senkrecht ist und die Schneidkante (33) in einem radial äußersten Punkt (39) schneidet, eine gedachte gerade Bezugslinie L die Schneide (33) im radial äußersten Punkt (39) schneidet und in dieser Querschnittsebene unter einem Winkel (β) von 6° zur Freifläche (32) an der Außenseite des Schneidelements (5) verläuft, und wobei in dieser Querschnittsebene gesehen die Arbeitsachse (17) des dem vorderen Teil (12) der Bohrstange am nächsten liegenden Stellglieds (16) im Dämpfungsmodul (14)
- einen Winkel von 90°±10° mit der Bezugslinie L bildet, vorzugsweise einen Winkel von 90°±5°, noch bevorzugter einen Winkel von 90°±1°, oder
- einen Winkel von 0°±10° mit der Bezugslinie L bildet, vorzugsweise einen Winkel von 0°±5°, noch bevorzugter einen Winkel von 0°±1°.

15. Nicht-rotierendes Bohrwerkzeug nach einem der Ansprüche 12-14, **dadurch gekennzeichnet, dass** das Bohrwerkzeug (1) wenigstens einen Schwingungssensor (43) aufweist, der am Vorderteil (12) der Bohrstange oder am Werkzeugteil (4) montiert ist.

16. Eine Bohranordnung, **dadurch gekennzeichnet, dass** sie Folgendes aufweist:
- eine Bohrstange (2) nach einem der Ansprüche 1-11 und
- eine elektronische Steuereinheit (41), die so eingerichtet ist, dass sie den elektrischen Strom zu dem Aktor (16) in jedem Dämpfungsmodul (14) des mindestens einen Dämpfungsmoduls oder der wenigstens zwei Dämpfungsmodule steuert, um die Erzeugung von Schwingungskräften in dem Aktor (16) in jedem Dämpfungsmodul (14) des wenigstens einen Dämpfungsmoduls oder der wenigstens zwei Dämpfungsmodule zu steuern.

17. Bohranordnung nach Anspruch 16, **dadurch gekennzeichnet,**
- **dass** die Bohranordnung (40) wenigstens einen Schwingungssensor (43) aufweist, der so eingerichtet ist, dass er Messsignale in Bezug auf die Schwingung der Bohrstange (2) erzeugt und die Messsignale an die elektronische Steuereinheit (41) sendet, und
- **dass** die elektronische Steuereinheit (41) so konfiguriert ist, dass sie die Messsignale von dem wenigstens einen Vibrationssensor (43) empfängt, wobei die elektronische Steuereinheit (41) so eingerichtet ist, dass sie den elektrischen Strom zum Aktor (16) in jedem Dämpfungsmodul (14) des wenigstens einen Dämpfungsmoduls oder der wenigstens zwei Dämpfungsmodule in Abhängigkeit von den Messsignalen des wenigstens einen Schwingungssensors (43) steuert, um die Erzeugung von Schwingungskräften im Aktor (1) in jedem Dämpfungsmodul (14) des wenigstens einen Dämpfungsmoduls oder der wenigstens zwei Dämpfungsmodule in Abhängigkeit von diesen Messsignalen zu steuern.

## Revendications

1. Barre d'alésage (2) destinée à un outil d'alésage non rotatif, la barre d'alésage (2) comprenant :
- une partie principale allongée (10) configurée pour être attachée à une structure de support d'une machine de coupe de métal, la partie principale (10) présentant une extrémité arrière (10b) et une extrémité avant opposée (10a) ; et
- une partie avant (12) présentant une extrémité arrière (12b) faisant face à l'extrémité avant (10a) de la partie principale (10) et une extrémité avant opposée (12a), l'extrémité avant (12a) de la partie avant (12) étant agencée pour porter une partie d'outil (4) dotée d'un élément de coupe (5), où :
- la barre d'alésage (2) comprend au moins un module d'amortissement (14) agencé entre l'extrémité avant (10a) de la partie principale (10) et l'extrémité arrière (12b) de la partie avant (12), où le au moins un module d'amortissement (14) présente une extrémité arrière (14b) faisant face à la partie principale (10), une extrémité avant opposée (14a) faisant face à la partie avant (12) et un axe central (15) s'étendant entre l'extrémité arrière (14b) et l'extrémité avant (14a) du module d'amortissement ;
- le au moins un module d'amortissement (14) est doté d'un actionneur de vibrations commandé électriquement (16) pour un amortissement de vibrations actif de la barre d'alésage (2), où cet actionneur (16) est configuré pour générer des forces vibratoires ; et
- la partie avant (12) est reliée à la partie principale (10) via le au moins un module d'amortissement (14), où la partie principale (10), la partie avant (12) et le au moins un module d'amortissement (14) forment ensemble un corps allongé (6), et où le au moins un module d'amortissement (14) constitue une section de longueur du corps allongé (6) ;
- **caractérisée en ce que** le au moins un module d'amortissement (14) est fixé entre la partie principale (10) et la partie avant (12) au moyen de tiges d'attache (22), où chacune des tiges d'attache (22) présente une première extrémité (22a) fixée à la partie principale (10) et une seconde extrémité opposée (22b) fixée à la partie avant (12), les tiges d'attache (22) s'étendant de préférence à travers des passages (23) dans le au moins un module d'amortissement (14).

2. Barre d'alésage selon la revendication 1, **caractérisée en ce que** le au moins un module d'amortissement (14) présente la même forme périphérique extérieure en coupe transversale que la partie principale (10) et/ou la partie avant (12).

3. Barre d'alésage selon la revendication 1 ou 2, **caractérisée en ce que** la partie principale (10) et/ou la partie avant (12) et/ou le au moins un module d'amortissement (14) sont cylindriques, de préférence cylindriques circulaires.

4. Barre d'alésage selon l'une quelconque des revendications 1 à 3, **caractérisée en ce qu'**une périphérie externe (18) de la partie principale (10) et une périphérie externe (18) du au moins un module d'amortissement (14) sont à fleur ou sensiblement à fleur l'une par rapport à l'autre.

5. Barre d'alésage selon l'une quelconque des revendications 1 à 4, **caractérisée en ce que** le au moins un module d'amortissement (14) est agencé avec son axe central (15) aligné ou sensiblement aligné avec un axe longitudinal (11) de la partie principale (10).

6. Barre d'alésage selon l'une quelconque des revendications 1 à 5, **caractérisée en ce que** ledit actionneur (16) est un actionneur à unique axe configuré pour générer des forces vibratoires parallèles ou au moins sensiblement parallèles à un unique axe de travail (17) de l'actionneur (16).

7. Barre d'alésage selon la revendication 6, **caractérisée en ce que** ledit axe de travail (17) s'étend dans un plan de coupe transversale qui est perpendiculaire à l'axe central (15) du au moins un module d'amortissement (14).

8. Barre d'alésage selon l'une quelconque des revendications 1 à 7, **caractérisée en ce que** la barre d'alésage (2) comprend au moins deux tels modules d'amortissement (14) agencés en série l'un après l'autre entre l'extrémité avant (10a) de la partie principale (10) et l'extrémité arrière (12b) de la partie avant (12).

9. Barre d'alésage selon la revendication 8, **caractérisée en ce que** les au moins deux modules d'amortissement (14) sont en butée l'un contre l'autre.

10. Barre d'alésage selon la revendication 8 ou 9, **caractérisée en ce que** l'actionneur (16) dans chacun des au moins deux modules d'amortissement (14) est un actionneur à unique axe configuré pour générer des forces vibratoires parallèles ou au moins sensiblement parallèles à un unique axe de travail (17) de l'actionneur (16), où les au moins deux modules d'amortissement (14) sont agencés avec les axes de travail (17) des actionneurs décalés angulairement l'un par rapport à l'autre.

11. Barre d'alésage selon la revendication 10, **caractérisée en ce que** les au moins deux modules d'amortissement (14) sont agencés avec les axes de travail (17) des actionneurs (16) s'étendant perpendiculairement l'un par rapport à l'autre.

12. Outil d'alésage non rotatif, **caractérisé en ce qu'**il comprend :
- une barre d'alésage (2) selon l'une quelconque des revendications 1 à 11 ; et
- une partie d'outil (4) dotée d'un élément de coupe (5), où cette partie d'outil (4) est attachée de manière retirable sur ou formée de manière solidaire avec la partie avant (12) de la barre d'alésage.

13. Outil d'alésage non rotatif selon la revendication 12, **caractérisé en ce que** la partie avant (12) de la barre d'alésage est réglable dans sa position de rotation par rapport au au moins un module d'amortissement (14), et/ou **en ce que** ladite partie d'outil (4) est réglable dans sa position de rotation par rapport à la partie avant (12) de la barre d'alésage.

14. Outil d'alésage non rotatif selon la revendication 12 ou 13, **caractérisé en :**
- **ce que** l'actionneur (16) dans chaque module d'amortissement (14) du au moins un module d'amortissement ou des au moins deux modules d'amortissement est un actionneur à unique axe configuré pour générer des forces vibratoires parallèles ou au moins sensiblement parallèles à un unique axe de travail (17) de l'actionneur (16) ; et **en**
- **ce que** l'élément de coupe (5) comprend un côté d'attaque (30), une surface en évidement (32) et une arête de coupe (33) formée au niveau d'une intersection entre le côté d'attaque et la surface en évidement, où selon une vue d'observation dans un plan de coupe transversale qui est perpendiculaire à un axe longitudinal (7) de la barre d'alésage (2) et coupe l'arête de coupe (33) en un point radialement le plus à l'extérieur (39), une droite de référence imaginaire L coupe l'arête de coupe (33) en le point radialement le plus à l'extérieur (39) et s'étend dans ce plan de coupe transversale à un angle (β) de 6° par rapport à la surface en évidement (32) à l'extérieur de l'élément de coupe (5), et où selon une vue d'observation dans ce plan de coupe transversale, l'axe de travail (17) de l'actionneur (16) dans le module d'amortissement (14) le plus proche de la partie avant (12) de la barre d'alésage :
• forme un angle de 90° ± 10° par rapport à ladite droite de référence L, de préférence un angle de 90° ± 5°, de façon davantage préférée un angle de 90° ± 1°, ou
• forme un angle de 0° ± 10° par rapport à ladite droite de référence L, de préférence un angle de 0° ± 5°, de façon davantage préférée un angle de 0° ± 1°.

15. Outil d'alésage non rotatif selon l'une quelconque des revendications 12 à 14, **caractérisé en ce que** l'outil d'alésage (1) comprend au moins un capteur de vibrations (43) monté sur la partie avant (12) de la barre d'alésage ou sur ladite partie d'outil (4).

16. Agencement d'alésage, **caractérisé en ce qu'**il comprend :
- une barre d'alésage (2) selon l'une quelconque des revendications 1 à 11 ; et
- une unité de commande électronique (41) configurée pour commander le courant électrique fourni à l'actionneur (16) dans chaque module d'amortissement (14) du au moins un module d'amortissement ou des au moins deux modules d'amortissement de sorte à commander la génération de forces vibratoires dans l'actionneur (16) dans chaque module d'amortissement (14) du au moins un module d'amortissement ou des au moins deux modules d'amortissement.

17. Agencement d'alésage selon la revendication 16, **caractérisé en :**
- **ce que** l'agencement d'alésage (40) comprend au moins capteur de vibrations (43) configuré pour générer des signaux de mesure associés à la vibration de la barre d'alésage (2) et pour envoyer les signaux de mesure à l'unité de commande électronique (41) ; et **en**
- **ce que** l'unité de commande électronique (41) est configurée pour recevoir les signaux de mesure provenant du au moins un capteur de vibrations (43), où l'unité de commande électronique (41) est configurée pour commander le courant électrique fourni à l'actionneur (16) dans chaque module d'amortissement (14) du au moins un module d'amortissement ou des au moins deux modules d'amortissement en fonction des signaux de mesure provenant du au moins un capteur de vibrations (43) de sorte à commander la génération de forces vibratoires dans l'actionneur (16) dans chaque module d'amortissement (14) du au moins un module d'amortissement ou des au moins deux modules d'amortissement en fonction de ces signaux de mesure.
